# EUROPEAN PATENT APPLICATION

(11) **EP 1 182 169 A1**
(43) Date of publication of application: **27.02.2002**
(21) Application number: 99902831.9
(22) Date of filing: 04.02.1999
(51) Int. Cl.: C01G 23/04, C01G 23/00

(54) **PROCESS FOR PRODUCING ANATASE TITANIA OR COMPOSITE OXIDE CONTAINING ANATASE TITANIA**

(71) Applicant: Japan Science and Technology Corporation, Kawaguchi-shi, Saitama 332-0012 (JP)
(72) Inventor: .MINAMI, Tsutomu, Osaka 589-0023 (JP); TATSUMISAGO, Masahiro, Osaka 599-8126 (JP); MATSUDA, Atsunori, Osaka 586-0082 (JP)
(74) Representative: Calamita, Roberto
(86) International application number: JP9900477
(87) International publication number: WO0046154

(57) **Abstract**

As a process for producing novel anatase titania or a composite oxide containing the anatase titania which is useful as a photocatalyst, bactericide, and anti-fungus agent and moreover, can be produced in various forms at a low temperature of 100°C or below, the invention of this application provides a process for producing the anatase titania or the composite oxide containing the anatase titania characterized by forming a gel comprising a metal oxide from a solution of a titanium the gel with water at a temperature of 100°C or below to produce the anatase titania or composite oxide.

## Description

### TECHNICAL FIELD

The invention of this application relates to a process for producing anatase titania or an composite oxide containing anatase titania. More specifically, the invention of this application relates to a process for producing novel anatase titania or anovel composite oxide containing the anatase titania which are useful as a photocatalyst, a bactericidal material, an anti-fungus material, etc. and furthermore, can be produced in a variety of forms at a low temperature of 100°C or below.

### BACKGROUND OF THE INVENTION

Titania as an oxide of titanium (Ti) , particularly anatase titania, is known as a catalyst for photolysis, a material for the electrode of a photocell, etc. and in recent years, has attracted attention to be useful also as a bactericidal material and an anti-fungus material depending upon photoreactive action.

The processes for producing titania and the functions thereof reported so far are outlined as follows.

About pure TiO₂ films, it is reported that a titania (TiO₂) film is formed on a glass substrate having a transparent electrically conductive tin oxide film coated thereon by adding dilute hydrochloric acid to an ethanol solution of titanium isopropoxide and then dip coating, and furthermore a heat treatment is carried out at 500°C so that a film where fine crystals of anatase are deposited can be prepared, and the resulting film acts as a photo-electrochemical film (T. Yoko, K. Kamiya, and S. Sakka, *Yogyo Kyokal-Shi*, 95 (1987), 150). It also is reported that an article where a colloidal solution of TiO₂ is coated at 450°C onto a glass substrate having a transparent electrically conductive tin oxide film formed thereon exhibits high efficiency as the electrode of a photocell (B. O'Regan and M. Gretzel, *Nature,* 353 (1991) 737).

On the other hand, about a TiO₂-SiO₂ system, it is reported that a composite oxide of the TiO₂-SiO₂ system can be prepared by use of bisacetylacetonate titanium diisopropoxide or ethyl bisacetoacetate titanium diisopropoxide and silicic acid; and in order to deposit an anatase phase, when 94 mole percent of TiO₂ is contained, a treatment at a high temperature of 500°C or above is needed, when 89 to 67 mole percent of TiO₂ is contained, a heat treatment at a high temperature of 750°C or above, and furthermore, when 50 mole percent of TiO₂ is contained, the composite oxide remains amorphous even by a heat treatment at 1000°C (Y. Abe, N. Sugimoto, Y. Nagano, and T. Misono, *J. Non-Cryst.*, 104 (1988) 164). In addition, it is reported that when film formation is carried out according to an RF-sputtering process by use of a mixed sputter gas of argon and oxygen at a substrate temperature of 200°C and a power of 200 W, all films are amorphous in the range of 2.3 to 67 mole percent in TiO₂ content.

Furthermore, it is reported that a TiO₂-SiO₂ film containing 16.5 mole percent of TiO₂ that is formed from a solution prepared by using titanium n-butoxide and silicon tetraethoxide as starting materials and hydrolyzing with dilute hydrochloric acid is amorphous when a heat treatment at 350°C is carried out, but further only when exposed to pressurized steam of about 1 atm, anatase TiO₂ fine crystals are deposited (A. Matsuda, T. Kogure, Y. Matsuno, S. Katayama, T. Tsuno, N. Tohge, and T. Minami, *J. Am. Ceram. Soc.*, 76 (1993) 2699).

However, in order to form anatase TiO₂, even a single component of TiO₂ requires a heat treatment at high temperature of 450°C or above, and furthermore a composite oxide of TiO₂-SiO₂ system, etc. require a further high heat treatment and complicated operations. Accordingly, it is fundamentally impossible to form anatase titania or a composite oxide containing anatase titania, for example, on substrates having low resistance to heat such as organic polymer substrates or living tissue having low resistance to high temperature, low pressure, and high pressure.

Therefore, the invention of this application solves the aforesaid problems of the related art, and aims at providing a novel process which can produce anatase titania or a composite oxide containing anatase titania at a low temperature that is a milder condition and, in addition at atmospheric pressure, thereby can form these on a variety of substrates including polymer materials or living tissue having low resistance to heat, and moreover can form anatase titania or a composite oxide containing anatase titania in a variety of forms such as bulk, film, fiber, powder, etc.

### DISCLOSURE OF THE INVENTION

For solving the aforesaid problems, the invention of this application provides a process for producing anatase titania or a composite oxide containing anatase titania characterized in that a gel containing a metal oxide is formed from a solution containing a hydrolyzable titanium compound, and subsequently the gel is allowed to react with water at a temperature of 100°C or below.

In the aforesaid process, the invention of this application also provides a process where the solution containing a hydrolyzable titanium compound contains an organic polymer, and the gel is an organic inorganic composite matter containing a metal oxide and the organic polymer, a process where the reaction of the gel with water is carried out with hot water, a process where a functional molecule or metal ion is dissolved in hot water, and anatase titania or the composite oxide containing anatase titania is doped with the functional molecule or metallic fine particle, and a process for forming it on a substrate as a film, and so forth.

And the invention of this application further provides anatase titania or the composite oxide containing anatase titania themselves obtained according to the aforesaid processes.

In particular, according to the invention of this application, a transparent film of anatase titania or a composite oxide containing anatase titania which has been difficult to from in the related art can be formed on a variety of substrates according to the low temperature process, and therefore the fields of application are extremely wide and promising.

### BRIEF DESCRIPTION OF THE DRAWINGS

Fig. 1 is a figure showing a high-resolution transmission electron microscope photograph of a partial section of a film in Example 1 of the invention.
Fig. 2 is a figure showing results of Fourier transform and lattice fringe analysis of Fig. 1 having undergone image processing.
Spots: Corresponding to (101) and (103) planes characteristic in anatase TiO₂.
Fig. 3 is figures showing the infrared absorption spectra of the film in Example 1 before and after a treatment with hot water.
Absorption spectra near 2900 cm⁻¹ and 1350⁻¹ are assigned to polyethylene glycol. Peaks at 955 cm⁻¹ are principally assigned to a Ti-O-Si bond.

### BEST MODE FOR CARRYING OUT THE INVENTION

The invention of this application has characteristics as described above, and modes for carrying out the invention are illustrated in detail below.

The bases of this application are illustrated again. The invention enables anatase titania or a composite oxide containing anatase titania to produce at a low temperature that is a very mild condition as compared with that in the related art by forming a gel containing a metal oxide from a solution containing at least a hydrolyzable titanium compound and then, allowing the gel containing a metal oxide to react with water. The invention of this application having these characteristics has been achieved by discovery that a product prepared by hydrolysis and polycondensation of a hydrolyzable titanium compound acquires densification and crystallization by a hot water of 100°C or below, etc. contrary to the conventional common sense and by discovery that the addition of an organic polymer to the gel promotes the deposition of anatase crystals by a treatment with hot water.

A variety of compounds can be used as the hydrolyzable titanium compound in the invention. Examples thereof include metal alkoxides, metal salts of organic acids, metal chlorides, and the derivatives thereof such as tetraisopropoxy titanium (Ti(OCH(CH₃)₂)₄), tetra-n-butoxy titanium (Ti (OCH₂CH₂CH₂CH)₄), tetrakis (2-ethylhexyloxy) titanium (Ti (OCH₂CH(C₂H₅)C₄H₉)₄), tetrastearyloxy titanium (Ti (OC₁₈H₃₇)₄), diisopropoxy bisacetylacetonate titanium (Ti(OCH(CH₃)₂)₂(OC(CH₃)CHCOCH₃)₂), diisopropoxy bisethyl acetoacetate titanium (Ti(OCH(CH₃)₂)₂) (OC (OC₂H₅)CHCOCH₃)₂), titanium tetrachloride (TiCl₄), etc. One kind of these or a combination of two or more kinds thereof can be used as starting materials. Of these, tetraisopropoxy titanium, tetra-n-butoxy titanium, titanium tetrachloride, etc. which have comparatively high reactivity to water are preferred.

Furthermore, when a composite oxide containing anatase titania is synthesized, the composite oxide can be composed by combination of various metal alkoxides, metal salts of organic acids, metal chlorides, or the derivatives thereof including Si, Al, B, P, Ta, Zr, Sn, V, W, etc. according to the purpose, use, etc. These starting materials also can be used singly or in a combination of two or more kinds thereof.

The starting materials are dissolved in a solvent, and hydrolysis is carried out by use of a catalyst such as acids or bases as needed. The solvent used herein includes hydrocarbons such as benzene, toluene, hexane, etc. and various organic solvents such as halogenated hydrocarbons, tetrahydrofuran (THF), acetonitrile, DMF, DMSO, etc. in addition to alcohols such as methanol, ethanol, 2-propanol, 1-butanol, etc. The catalyst for hydrolysis can be exemplified by mineral acids and organic acids such as hydrochloric acid, nitric acid, acetic acid, sulfuric acid, phosphoric acid, etc.; and bases such as ammonia, amines, etc.

Furthermore, in the process of the invention, an organic polymer can be added to the solution containing at least a hydrolyzable titanium compound for the purpose of controlling the specific surface area or porosity of anatase titania or a composite oxide containing anatase titania obtained finally. The resulting gel forms an organic inorganic composite matter containing a metal oxide and an organic polymer and furthermore, anatase titania or a composite oxide containing anatase titania controlled in specific surface area and porosity can be synthesized by eluting the organic polymer. The organic polymer added to the gel beforehand is eluted by a treatment with hot water, and void is formed from volume occupied by the organic polymer in the gel to facilitate permeation of hot water and acts to promote the deposition of anatase crystals within the gel.

These organic polymers include polyalkyl ethers such as polyethylene glycol, polypropylene glycol, and polytetramethylene glycol; polyether glycols such as cellulose acetate, cellulose nitrate, and hydroxypropylcellulose; and organic polymers having solubility to water such as polyvinyl alcohol, polyvinyl acetate, polyvinyl chloride, etc. Of these, the polyalkyl ethers that can be easily eluted with hot water are preferred. The amount of the organic polymer added can be changed depending upon the specific surface area or porosity of anatase titania or a composite oxide containing anatase titania obtained finally, or depending upon the dispersibility of anatase crystals. As the amount of the organic polymer added increases, the specific surface area and the pore volume increase. In addition, as the specific surface area and the pore volume of void increase, the deposition of anatase crystals is promoted and the dispersibility also is improved. The ratio of the organic polymer to the composite oxide is arbitrary and, for example, from about 0.01 to about 100 in weight ratio, but the range of 0.1 to 10 is preferred in view of synthesis, function for uses, etc.

The reaction of the gel containing a metal oxide derived from the hydrolyzable titanium compound with water at a temperature of 100°C or below can be easily achieved by a treatment with hot water. The temperature of the hot water can be set to an arbitrary temperature of 100°C or below, but 50°C or higher is preferred for increasing the treating rate. The reaction with water at a temperature of 100°C or below can be carried out at a condition of atmospheric pressure. As a matter of course, reduced pressure or application of pressure also is possible, if desired.

In the invention, anatase titania or a metal oxide in a composite oxide containing anatase titania can be doped with the functional molecule by dissolving the functional molecule in the aforesaid hot water. The functional molecule includes ruthenium complexes for photocells such as trisbipyridine ruthenium (II) complex, (2,2'-bipyridine)[2-(2-pyridyl)-benzimidazole] ruthenium [II] complex, etc.; dyes for laser such as rhodamine B, rhodamine 6G, coumarin, etc.; photochromic dyes such as spiropyran, methylviologen, etc.; and the like. Similarly, a metal ion is dissolved in hot water, and a reduction treatment is then carried out so that the metallic fine particles can be supported on anatase titania or a metal oxide in a composite oxide of anatase titania. The metal ion can be exemplified by ions of novel metals such as platinum, gold, silver, copper, etc., but as a matter of course, is not limited to these.

Furthermore, in the invention of this application, it is possible to form anatase titania or the composite oxide containing anatase titania in a variety of forms such as film, powder, bulk, etc.

When a film is formed as a substrate, a gel film containing the metal oxide is formed on the substrate from a solution containing at least a hydrolyzable titanium compound through dipping or spin coating, and then the gel film containing the metal oxide is allowed to react with water to form a film of anatase oxide or a composite oxide containing anatase titania. Arbitrary substrates such as glass, ceramics, metals, polymers, living tissue, etc. canbe used as the substrate. In particular, the effect of low temperature synthesis of the invention can preferably be exerted efficiently for materials low in thermal resistance such as polymers and living tissue or materials poor in resistance in an atmosphere of reduced pressure or applied pressure. An article where a transparent electrically conductive film, etc. is formed on a glass substrate such as quartz glass, soda-lime glass, alkali aminosilicate glass, alkali borosilicate glass, multi-component non-alkali glass, lowly expanded crystallized glass, etc. can be used as the electrode of a photocell.

For the formation of powdery particles, the powdery particles are prepared by hydrolyzing a solution containing at least a hydrolyzable titanium compound at an acidic condition and then adding dropwise the resulting solution to a basic solution. The particles are once recovered by use of the method of centrifuging, etc., undergo drying or a heat treatment as needed, and then re-dispersed in an appropriate dispersing medium to allow reaction with water.

For example, according to the processes of the invention as described above, a gel containing a metal oxide is formed from a solution containing at least a hydrolyzable titanium compound, and then allowed to react with water at a temperature of 100°C or below, thereby to synthesize anatase titania or a composite oxide containing anatase titania at a low temperature. In particular, in the invention, molecules of water such as hot water, etc. have an action to attack the hydrolysis-polycondensation product from the hydrolyzable titanium compound to promote the dissociation of a bond with another oxide, the condensation of a TiO₂ component, nucleation, and the growth of nuclei, and thereby the formation of anatase titania is realized at a very mild condition of 100°C or below.

The organic polymer added to the solution containing at least a hydrolyzable titanium compound has an action to control the specific surface area and pore of the resulting metal oxide and to promote the deposition of an anatase crystalline phase.

The anatase titania or the composite oxide containing anatase titania according to the invention can be prepared in a variety of forms such as film, fiber, powder, bulk, etc. In particular, in the invention, a transparent film of anatase titania or film of a composite oxide containing anatase titania where the formation of these films has been different in the related art can be formed on a variety of substrates according to the low temperature process and therefore, the fields of the application thereof are extremely wide and promising. And anatase titania or the composite oxide containing anatase titania according to the invention enables application to a photocatalyst. Concretely, they are used as an electrode material for a photocell, a catalyst for photolysis of water or organic substances, a catalyst for photoreduction of aerial pollution substances such as nitrogen oxides and carbon dioxide, or a bactericide or anti-fungus agent against harmful microorganisms. Particularly, in the anatase titania or the composite oxide containing anatase titania according to the invention, anatase titania can be deposited at a low temperature of 100°C or below and therefore, the formation thereof on an organic polymer, living tissue, etc., which has been difficult so far, also is possible.

### EXAMPLES

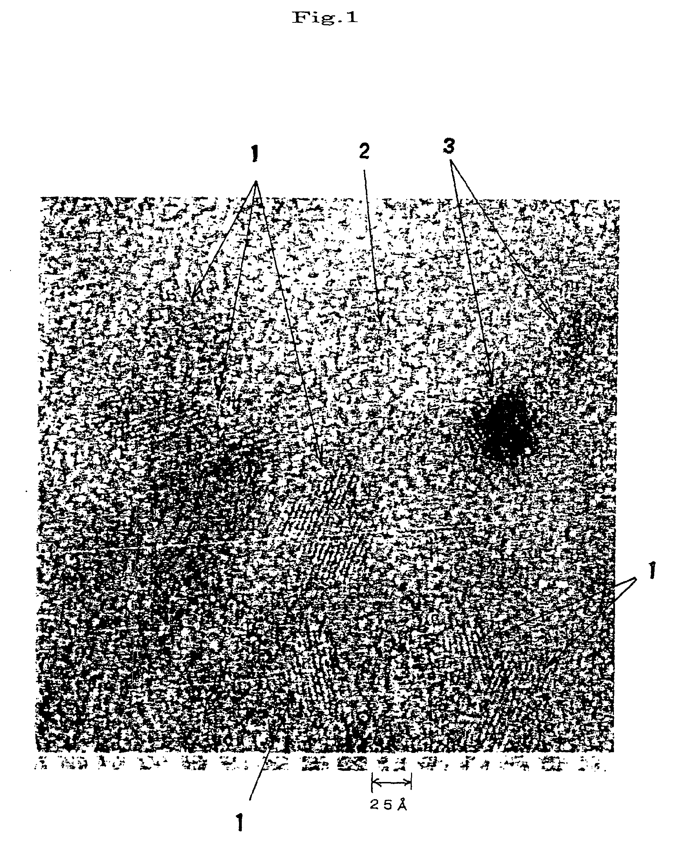

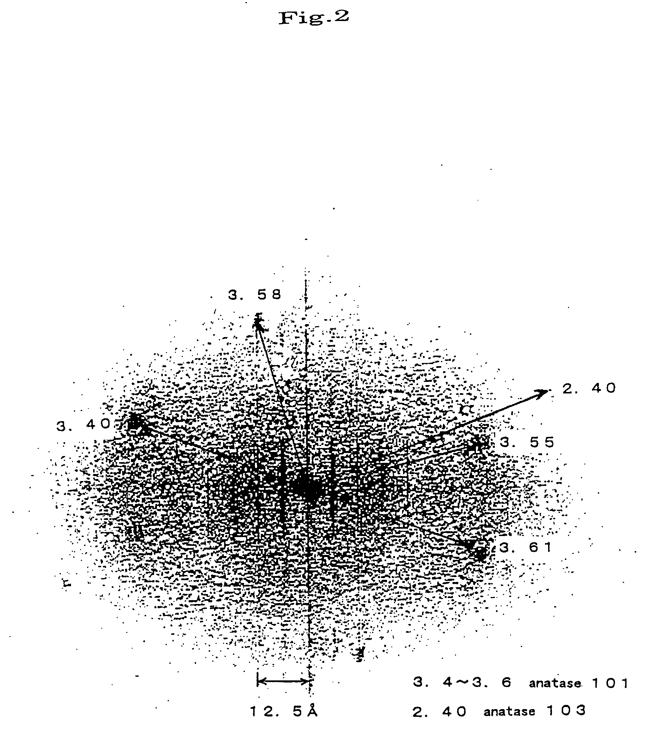

Examples are shown below, and the invention is illustrated in further detail. Fig. 1 of the accompanying drawing is a figure based on a high-resolution transmission electron microscope photograph of a partial section of a film in Example 1 of the invention and shows trisbipyridine ruthenium (II) complex 3 highly dispersed in the composite oxide of TiO₂-SiO₂ system 2 containing anatase titania 1. Fig. 2 shows results of the Fourier transform and lattice fringe analysis of Fig. 1 having undergone image processing, and spots are observed in positions corresponding to (101) and (103) planes characteristic in anatase TiO₂.

### (Example 1)

A solution containing 5 moles of ethyl alcohol to 1 mole of silicon tetraethoxide was prepared. Dilute hydrochloric acid (3 weight percent) was added to this solution and stirred at room temperature for 30 min to carry out hydrolysis. Herein, the mole ratio of water to the silicon alkoxide was adjusted to 4. Furthermore, titanium tetra-n-butoxide was dissolved in this solution so that the mole ratio of titanium dioxide and silicon dioxide became 16.5:83.5 finally, and stirred for 30 min to carry out hydrolysis. The resulting solution, which was colorless and transparent, was further diluted with ethyl alcohol in order to adjust the thickness of a film formed on a substrate by coating. Polyethylene glycol (PEG) having an average molecular weight of 600 was added to this solution so that the weight ratio of PEG to titanium dioxide and silicon dioxide, the oxides formed finally, became (PEG)/(TiO₂+SiO₂) - 1.0, and dissolved uniformly to prepare a coating solution.

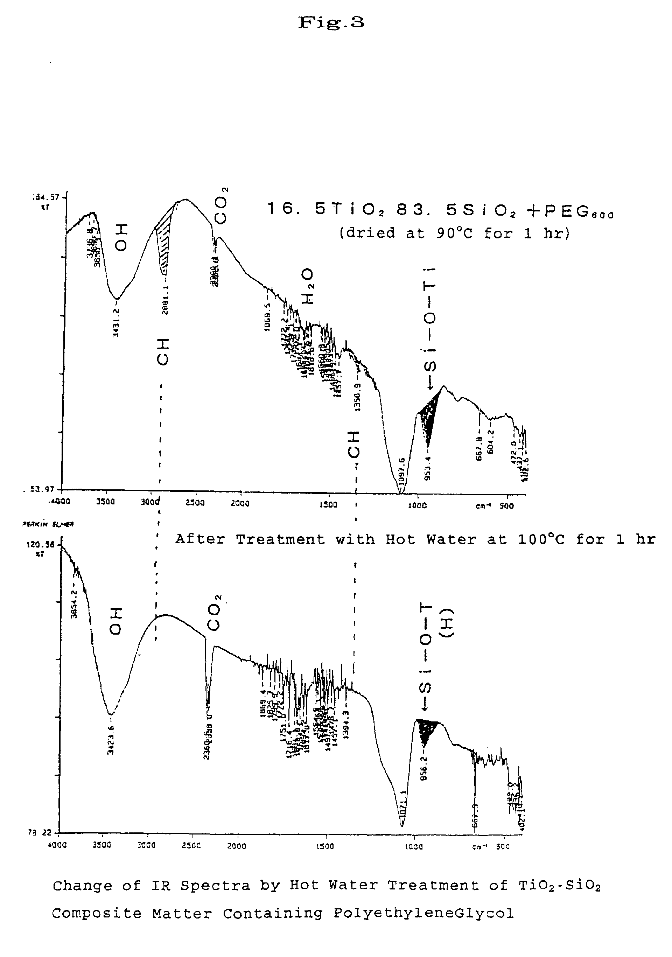

A silicon wafer substrate and a non-alkali glass substrate were dipped in the aforesaid solution, and the respective substrates were covered with gel films comprising polyethylene glycol and a hydrolysis-polycondensation product formed from a titanium organic compound and silicon organic compound. These were heated and dried at 90°C for 30 min. The gel films of 16.5 TiO₂-83.5 SiO₂ containing polyethylene glycol was obtained according to the aforesaid operations. This was dipped in hot water (100°C) of 10⁻³ M trisbipyridine ruthenium (II) dichloride for 1 hr. In the treatment with hot water, the porosity of the films was found to be about 35 percent just after eluting polyethylene glycol by the treatment with hot water. Observations by infrared absorption spectra and a transmission electron microscope were made about the films before and after the treatment with hot water. It was found from the infrared absorption spectra shown in Fig. 3 that absorption spectra in about 2900 cm⁻¹ and about 1350 cm⁻¹ assigned to polyethylene glycol completely disappeared, and polyethylene glycol was eluted from the gel films by the treatment with hot water. Furthermore, it was found that the intensity of a peak at 955cm⁻¹ assigned principally to a Ti-O-Si bond significantly decreased, and the Ti-O-Si bond was dissociated. Although the film before carrying out the treatment with hot water was a film of a homogeneous 16.5 TiO₂-83.5 SiO₂ amorphous gel containing polyethylene glycol, it was found from the high-resolution transmission electron microscope photograph as described above in Fig. 1 that in the film dipped in hot water (100°C) of 10⁻³ M trisbipyridine ruthenium (II) dichloride for 1 hr, trisbipyridine ruthenium (II) complex 3 was dispersed in composite oxide of TiO₂-SiO₂ system 2 containing anatase titania 1 of 10 to 30 nm. Anatase titania also is ascertained by results of the Fourier transform and lattice fringe analysis of Fig. 2.

The film was yellow and transparent because of absorption by the ruthenium complex. It was found from the result of analysis of the film composition that the SiO₂ component was eluted by the treatment with hot water, and this promoted the deposition of anatase crystals.

The aforesaid results made it clear that the composite oxide containing anatase titania and the composite oxide containing the anatase titania that contained a functional molecule can be synthesized according to the low temperature process of 100°C at highest.

### (Example 2)

A solution containing 5 moles of ethyl alcohol to 1 mole of titanium tetra-n-butoxide was prepared. Dilute hydrochloric acid (3 weight percent) was added to this solution and stirred at room temperature for 30 min to carry out hydrolysis. The resulting solution, which was colorless and transparent, was further diluted with ethyl alcohol in order to adjust the thickness of a film formed on a substrate by coating. Polyethylene glycol (PEG) having an average molecular weight of 600 was added to and uniformly dissolved in this solution so as to be (PEG) /(TiO₂) = 1.0 in weight ratio to titanium oxide that was an oxide formed finally to prepare a coating solution.

A silicon wafer substrate and non-alkali glass substrate were dipped in the aforesaid solution to coat the respective substrates with gel films consisting of polyethylene glycol and a hydrolysis-polycondensation product from the titanium organic compound. These were heated and dried at 90°C for 30 min. TiO₂ gel films containing polyethylene glycol were obtained by the aforesaid operations. This was dipped in hot water (100°C) for 5 hr. Observations by infrared absorption spectra and a transmission electron microscope were made about the films before and after the treatment with hot water. It was found from the infrared absorption spectra that absorption spectra of about 2900 cm⁻¹ and about 1350 cm⁻¹ assigned to polyethylene glycol completely disappeared by the treatment with hot water, and polyethylene glycol was eluted from the gel films. It also was found that the intensity of a peak at 1000 cm⁻¹ assigned principally to a Ti-OH bond decreased, and the polymerization of TiO₂ was promoted. It was found from the observation by a transmission electron microscope that the films before undergoing the treatment with hot water were uniform TiO₂ amorphous gel films containing polyethylene glycol. On the other hand, the films dipped in hot water (100°C) for 5 hr were found to form light-transmitting titania consisting of anatase fine crystals of 10 to 30 nm. The results as described above show clearly that anatase titania can be synthesized according to the low temperature process at 100°C at highest.

### (Example 3)

The same operations as in Example 2 were carried out by use of a polyethylene terephthalate (PET) substrate. It was found from observation by a transmission electron microscope that the film dipped in hot water (100°C) for 5 hr formed light-transmitting titania consisting of anatase fine crystals of 10 to 30 nm. The results as described above show clearly that anatase titania can be synthesized also on a polymer substrate according to the low temperature process of 100°C at highest.

### (Example 4)

The same operations as in Example 2 were carried out about an xTiO₂-(100-x)SiO₂ system selected (x = 20, 40, 60, and 80 mole percent) . It was found from observation by a transmission electron microscope that the films dipped in hot water (100°C) for 5 hr turned into transparent films of the composite oxides of the TiO₂-SiO₂ system containing anatase titania of 10 to 30 nm. The results as described above show clearly that the composite oxides containing anatase titania can be synthesized according to the low temperature process of 100°C at highest.

### (Example 5)

The same operations as those in Example 4 were carried out about an xTiO₂- (100-x)Al₂O₃ system and an xTiO₂- (100-x) ZrO₂ system (x = 20, 40, 60, and 80 mole percent) selected. Aluminum tetra-sec-butoxide and zirconium tetra-n-butoxide that were stabilized with acetylacetone were used as starting materials for Al₂O₃ and ZrO₂, respectively. It was found from observation by a transmission electron microscope that the films dipped in hot water (100°C) for 5 hr turned into transparent films of the composite oxides of the TiO₂-Al₂O₃ system and the TiO₂-ZrO₂ system containing anatase titania of 10 to 30 nm. The results as described above show clearly that a variety of composite oxides containing anatase titania can be synthesized according to the low temperature process of 100°C at highest.

### (Example 6)

Although the results of the formation of the films were described in Examples of 1 to 5, similar results were obtained also in experiments on the preparation of fine particles.

### (Comparative Example 1)

Similarly to Example 2, the coating solutions was prepared, a silicon wafer substrate and non-alkali glass substrate were dipped therein, and the respective substrates were covered with gel films consisting of polyethylene glycol and a hydrolysis-polycondensation product from the titanium organic compound. These were heated and dried at 90°C for 30 min. TiO₂ gel films containing polyethylene glycol were obtained by the aforesaid operations. These underwent a heat treatment in the air at 350°C for 1 hr. It was found from infrared absorption spectra that polyethylene glycol was thoroughly pyrolyzed and disappeared owing to the heat treatment. It was found from observation by a transmission electron microscope that no anatase crystals were observed in the resulting TiO₂ films, and porous amorphous films were formed.

### (Comparative Example 2)

A coating solution consisting of silicon tetraethoxide, titanium tetra-n-butoxide, ethyl alcohol, and dilute hydrochloric acid was prepared at a condition where no polyethylene glycol is added.

A silicon wafer substrate and anon-alkali glass substrate were dipped in the aforesaid solution, and the respective substrates were coated with TiO₂-SiO₂ gel films consisting of a hydrolysis-polycondensation product from the titanium organic compound. These were heated and dried at 90°C for 30 min. The TiO₂-SiO₂ gel films were obtained by the aforesaid operations. The porosity of the resulting films was found to be about 9 percent and to be low as compared with the film prepared by adding and then eluting polyethylene glycol in Example 1. These were dipped in hot water (100°C) for 5 hr. Observations by infrared absorption spectra and a transmission electron microscope were made about the films before and after the treatment with hot water. It was found from the infrared absorption spectra that the intensity of peaks at 955 cm⁻¹ assigned mainly to a Ti-O-Si bond decreased by the treatment with hot with water, and the bond was dissociated. It was found from the observation by the transmission electron microscope that the films before undergoing the treatment with hot water were amorphous gel films of TiO₂-SiO₂ system. On the other hand, in the films dipped in hot water (100°C) for 1 hr, it was found that anatase titania of 10 to 30 nm was slightly deposited on the surfaces of the films. It was found from the results as described above that the pore produced by the addition and elution of the organic polymer acts to carry out efficiently the reaction of water with the TiO₂ component.

### INDUSTRIAL APPLICABILITY

As illustrated above in detail, by the invention of this application, a gel containing a metal oxide is formed from a solution containing at least a hydrolyzable titanium compound and subsequently, the gel containing the metal oxide is allowed to react with water at a temperature of 100°C or below. This enables anatase titania or a composite oxide containing the anatase titania to synthesize at a low temperature. This process makes it possible to form the films of the anatase titania or transparent composite oxide containing the anatase titania on a variety of substrates including polymer materials and living tissue having low heat resistance at very mild conditions of atmospheric pressure and 100°C or below. Furthermore, the powder of the anatase titania or composite oxide containing the anatase titania can be synthesized at very mild conditions of atmospheric pressure and 100°C or below.

## Claims

1. A process for producing anatase titania or a composite oxide containing the anatase titania **characterized in that** a gel containing a metal oxide is formed from a solution containing a hydrolyzable titanium compound, and subsequently this gel is allowed to react with water at a temperature of 100°C or below to produce the anatase titania or the composite oxide containing the anatase titania.

2. A process according to claim 1 wherein the solution containing a hydrolyzable titanium compound contains an organic polymer, and the gel is organic inorganic composite matter containing a metal oxide and the organic polymer.

3. A process according to claim 2 wherein the organic polymer is a water-soluble organic polymer.

4. A process according to any one of claims 1 to 3 wherein the hydrolyzable titanium compound is an alkoxide of titanium.

5. A process according to any one of claims 1 to 4 wherein reaction of the gel with water is carried out with hot water.

6. A process according to claim 5 wherein a functional molecule or a metal ion is dissolved in the hot water, thereby to dope the anatase titania or the composite oxide containing the anatase titania with the functional molecule or metallic particles.

7. A process according to any one of claims 1 to 6 wherein a gel film is formed on a substrate and then allowed to react with water to produce a film.

8. The anatase titania or the composite oxide containing the anatase titania obtained according to any process of claims 1 to 7.

9. A transparent film of the composite oxide and a substrate having the transparent film of the composite oxide formed thereon as described in claim 8.
